# EUROPEAN PATENT APPLICATION

(11) **EP 4 797 054 A1**
(43) Date of publication of application: **26.08.2026**
(21) Application number: 25227018.6
(22) Date of filing: 23.12.2025
(51) Int. Cl.: G06F 3/01, G06F 3/02, G06F 3/033

(54) **CONTACT-TYPE INPUT DEVICE INCLUDING NON-CONTACT INPUT MODULE**

(30) Priority: 19.02.2025 KR 20250021685
(71) Applicant: Aplusx Inc., Yongin-si, Gyeonggi-do (KR)
(72) Inventor: YOON, Ji Yong, 14100 Anyang-si (KR); SHIM, Kunhee, 06616 Seoul (KR); HA, Younghwan, 07980 Yangcheon-gu (KR)
(74) Representative: dompatent

(57) **Abstract**

Provided is a contact-type input device including a non-contact input module. The device includes a contact-type first input module, a non-contact-type second input module, and a processor configured to analyze a first input signal generated by the first input module and a second input signal generated by the second input module in different manners, and to transmit at least one of the results of the analysis to a computer.

## Description

### [TECHNICAL FIELD]

The present disclosure relates to a contact-type input device including a non-contact input module.

### [BACKGROUND ART]

An input device of a computer is a device that allows a user to transmit data to the computer. Various types of input devices exist, such as a keyboard, a mouse, a touchscreen, and a scanner, and input data is processed by the computer to output a desired result.

Among the input devices, a keyboard is a most basic device for inputting characters, numbers, and symbols, and has inconveniences such as typing errors, wrist fatigue, and noise generation. A mouse is a device for operating a computer by moving a cursor and performing clicks, and has inconveniences such as accuracy issues, wrist fatigue, and space limitations.

### [DETAILED DESCRIPTION OF THE INVENTION]

### [TECHINICAL PROBLEM]

The present disclosure is to provide a contact-type input device including a non-contact input module.

The technical problems to be solved by the present disclosure are not limited to those described above, and other technical problems will be clearly understood by those skilled in the art from the following description.

### [TECHNICAL SOLUTION]

In an aspect of the present disclosure, a contact-type input device including a non-contact input module may include a contact-type first input module, a non-contact-type second input module, and a processor configured to analyze a first input signal generated by the first input module and a second input signal generated by the second input module in different manners, and to transmit at least one of results of the analysis to a computer.

Furthermore, when the first input module is in a form of a keyboard, the second input module may be configured as a printed circuit board (PCB) and disposed under key switches included in the first input module.

Furthermore, the second input signal may be an operation signal according to a change in an electric field or infrared light, and the processor may analyze the second input signal based on positional changes along x-axis, y-axis, and z-axis of the electric field.

Furthermore, the second input signal may include at least one of a second-1 input signal replacing a function of a mouse and a second-2 input signal replacing a key function of a keyboard.

Furthermore, the second-1 input signal may be generated according to movement of a user's finger in a first area of the first input module, and the second-2 input signal may be generated according to a gesture of a user's hand in a second area of the first input module, wherein the gesture may be set to have different motions for respective key functions.

Furthermore, the processor may maintain an operation mode of the second input module in an ON state, but may not perform analysis of the second input signal generated when a z-axis position value of a user's hand is smaller than a preset z-axis reference value.

Furthermore, when the first input module is in a form of a mouse, the second input module may be configured as a printed circuit board (PCB) and disposed under buttons and a wheel included in the first input module.

Furthermore, the processor may change an operation mode of the second input module to an ON state or an OFF state according to a distance between a user's hand and the first input module.

In another aspect of the present disclosure, a contact-type input method including a non-contact input module may include analyzing at least one of a first input signal generated by a contact-type first input module or a second input signal generated by a non-contact-type second input module in different manners, and transmitting a result of the analysis to a computer.

In addition, a computer-readable recording medium storing a computer program for executing a method for implementing the present disclosure may be further provided.

### [ADVANTAGEOUS EFFECTS OF THE INVENTION]

According to the above-described means for solving the problems, a user can input content and control a cursor without applying physical force directly to a keyboard or a mouse through a non-contact input method using an electric field. Accordingly, burden on a user's wrist is reduced, which is effective for wrist health.

In addition, since a keyboard can replace mouse functions, efficient space utilization is possible.

The effects of the present disclosure are not limited to the effects mentioned above, and other effects not mentioned can be clearly understood by those skilled in the art from the description.

### [DESCRIPTION OF THE DRAWINGS]

FIG. 1 is a block diagram illustrating a configuration of a contact-type input device including a non-contact input module according to an embodiment of the present disclosure.
FIG. 2 is a flowchart illustrating a contact-type input method including a non-contact input module according to an embodiment of the present disclosure.
FIG. 3 is a diagram for describing contact-type input according to an embodiment of the present disclosure.
FIG. 4 is a diagram for describing non-contact input according to an embodiment of the present disclosure.
FIG. 5 is a diagram for describing, during non-contact input, an input replacing a keyboard function and an input replacing a mouse function according to an embodiment of the present disclosure.
FIG. 6 is a diagram for describing a mapping table between key functions and gestures during non-contact input replacing keyboard functions according to an embodiment of the present disclosure.

### [BEST MODE]

Throughout the present disclosure, the same reference numerals refer to the same components. The present disclosure does not describe all the elements of the embodiments, and common contents in the technical field to which the present disclosure belongs or contents overlapping between embodiments are omitted. The terms 'unit,' 'module,' 'member,' and 'block' used in the specification can be implemented in software or hardware, and depending on the embodiments, a plurality of 'units,' 'modules,' 'members,' or 'blocks' may be implemented as a single component, or a single 'unit,' 'module,' 'member,' or 'block' may include a plurality of components. Throughout the specification, when one component is described as being "connected" to another component, it includes both direct and indirect connections, including connections via a wireless communication network.

Throughout the specification, when a component is described as "including" another component, it does not exclude other components unless explicitly stated otherwise.

Throughout the specification, when a component is described as being located "on" another component, it includes both direct contact and indirect placement with another component therebetween.

Terms such as "first" and "second" are used only to distinguish one component from another and do not limit the components.

Singular expressions include plural expressions unless the context clearly indicates otherwise.

The identification codes for each step are used for convenience of explanation and do not describe the order of each step. Each step may be performed in a different order than specified unless the context clearly indicates a specific order.

Hereinafter, principles of operation and embodiments of the present disclosure will be described with reference to the accompanying drawings.

Before proceeding, the meanings of terms used in this specification will be briefly described. However, since the description of terms is intended to aid understanding of this specification, it should be noted that unless explicitly stated as limiting the disclosure, they are not used in a way that limits the technical ideas of this disclosure.

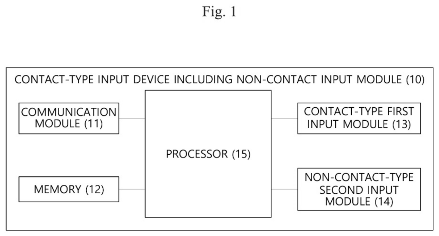

FIG. 1 is a block diagram illustrating a configuration of a contact-type input device including a non-contact input module according to an embodiment of the present disclosure.

A contact-type input device including a non-contact input module 10 (hereinafter, referred to as a contact-type input device 10) is an input device connected to a computer via a wired or wireless connection, such as a keyboard or a mouse.

The computer may include, for example, a notebook computer, a desktop computer, a laptop computer, a tablet PC, or a slate PC equipped with a web browser.

The contact-type input device 10 supports both a contact-type input method through direct typing and a non-contact input method using movement or gestures of a user's hand based on an electric field.

Referring to FIG. 1, the contact-type input device 10 may include a communication module 11, a memory 12, a contact-type first input module 13, a non-contact-type second input module 14, and a processor 15. However, embodiments are not limited thereto, and the contact-type input device 10 may include fewer or more components than those illustrated. In some embodiments, the memory 12 may be omitted.

The communication module 11 may include a wired communication module enabling wired communication or a wireless communication module enabling wireless communication between the contact-type input device 10 and the computer.

The wired communication module may include various cable communication module such as USB or PS/2.

The wireless communication module may include communication modules that support various wireless communication schemes such as Bluetooth^{™}, infrared (IR), or 2.4 GHz communication.

The memory 12 may store data supporting various functions of the contact-type input device 10, programs for operation of the processor 15, input/output data, and instructions for operating the contact-type input device 10.

The contact-type first input module 13 receives input through physical contact with a user. For example, when a user presses a key by applying physical force during typing, the contact-type first input module 13 may generate a first input signal.

The non-contact-type second input module 14 is an electric-field-based input module that receives input in a non-contact manner. For example, the non-contact-type second input module 14 may generate a second input signal according to a change in an electric field or infrared light caused by a gesture or movement of a user's hand or finger.

Specifically, the non-contact-type second input module 14 may detect a position and movement of a user's body part including a hand or finger in a non-contact manner using a sensor.

For example, an electric-field-based non-contact method may be applied. In this case, the non-contact-type second input module 14 may include an electrode module that artificially generates an electric field and detects a change in the electric field caused by a user's hand or finger. However, the non-contact method is not limited thereto, and an infrared method, a laser method, a magnetic field method, or an ultrasonic method may also be applied.

The processor 15 may control operations of components of the contact-type input device 10, and may include or be coupled to a memory storing data for executing algorithms or programs reproducing such algorithms. The memory 12 and the processor 15 may be implemented as separate chips. The memory 12 and the processor 15 may be implemented as separate chips or as a single chip.

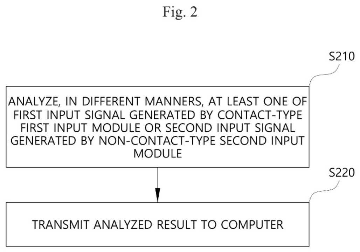

The processor 15 may control one or more of the above-described components to implement various embodiments described with reference to FIGS. 2 to 6.

When the contact-type input device 10 is in a form of a keyboard, the processor 15 may be a microcontroller unit (MCU) of the keyboard. When the contact-type input device 10 is in a form of a mouse, the processor 15 may be a microcontroller unit (MCU) of the mouse.

Hereinafter, operations when the contact-type input device 10 is in a form of a keyboard will be described in detail with reference to FIGS. 2 to 6. This embodiment may be applied to a situation in which only a keyboard is connected to a computer without a mouse, but is not limited thereto and may also be applied when both a keyboard and a mouse are connected.

FIG. 2 is a flowchart illustrating a contact-type input method including a non-contact input module according to an embodiment of the present disclosure.

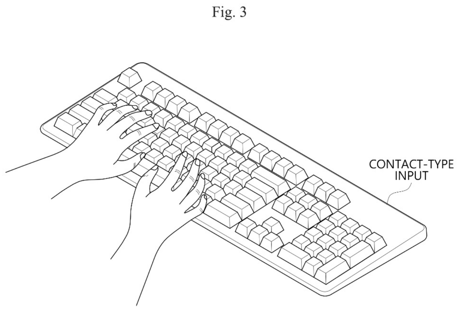

FIG. 3 is a diagram for describing contact-type input according to an embodiment of the present disclosure.

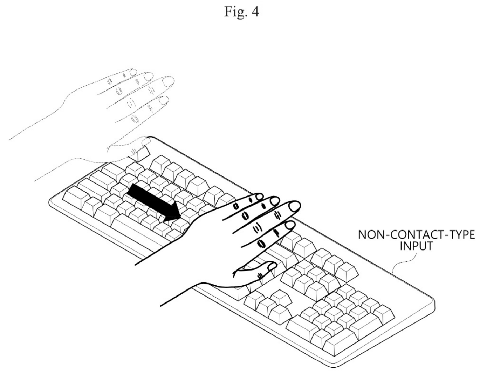

FIG. 4 is a diagram for describing non-contact input according to an embodiment of the present disclosure.

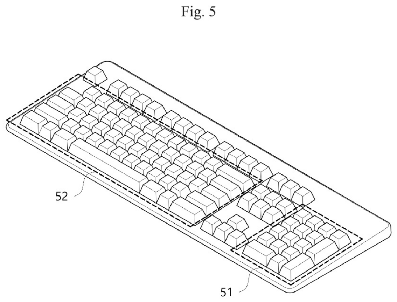

FIG. 5 is a diagram for describing, during non-contact input, an input replacing a keyboard function and an input replacing a mouse function according to an embodiment of the present disclosure.

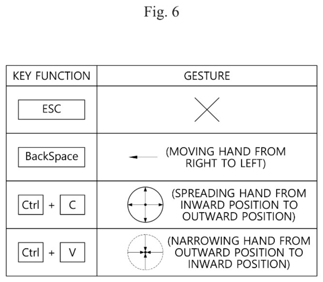

FIG. 6 is a diagram for describing a mapping table between key functions and gestures during non-contact input replacing keyboard functions according to an embodiment of the present disclosure.

Referring to FIG. 2, the processor 15 of the contact-type input device 10 may analyze, in different manners, at least one of a first input signal generated by the contact-type first input module 13 or a second input signal generated by the non-contact-type second input module 14 (step S210).

A conventional keyboard includes keycaps, key switches, a reinforcing plate, a printed circuit board (PCB), and a housing. The reinforcing plate prevents wobbling of the key switches. In the keyboard-type contact-type input device 10 according to the present disclosure, the non-contact-type second input module 14 may be disposed at a position of the reinforcing plate to replace the reinforcing plate.

That is, the non-contact-type second input module (hereinafter, second input module) 14 may be configured as a PCB for generating an electric field and disposed under key switches included in the contact-type first input module (hereinafter, first input module) 13.

According to embodiments, the second input module 14 may be implemented as a single PCB or as a plurality of PCBs.

The first input module 13 may generate the first input signal based on a user's typing. Specifically, the first input signal is an electrical signal generated when a switch of a specific key operates as the user presses the key.

Referring to FIG. 3, when a user performs typing as a contact-type input, the first input module 13 recognizes the typing and generates the first input signal.

The processor 15 may analyze the first input signal based on a key matrix composed of intersections of rows and columns.

Specifically, each key has a specific coordinate corresponding to a row and a column. When a user presses a key, a circuit is closed at the coordinate of the key, and the processor 15 may recognize which key has been pressed based on the coordinate. For example, the processor 15 may recognize that the key pressed is "A" through the coordinate.

The second input module 14 may generate the second input signal based on a movement or gesture of a user's hand or finger when the hand is spaced apart from the contact-type input device 10 by a preset distance. The second input signal may be an operation signal according to a change in an electric field caused by the movement or gesture. Alternatively, the second input signal may be an operation signal according to a change in infrared light. Referring to FIG. 4, when a user performs a gesture or movement above a keyboard, such as swiping a hand from left to right, the non-contact-type second input module 14 may recognize the gesture and generate the second input signal.

The processor 15 may analyze the second input signal based on positional changes along x-axis, y-axis, and z-axis of the electric field.

Specifically, when a user performs a specific gesture or movement, at least one of x-axis, y-axis, or z-axis position values may change. The processor 15 may recognize the gesture or movement based on a difference between a reference position value and a changed position value. For example, when a user swipes a hand from left to right, a position value along the x-axis is changed, and the processor 15 may recognize that the user has swiped the hand from left to right based on a difference between a reference position value along the x-axis and a changed position value.

In this case, the second input signal may include at least one of a second-1 input signal replacing a function of a mouse and a second-2 input signal replacing a key function of a keyboard.

The second-1 input signal may be generated according to movement of a user's finger in a first area of the first input module 13.

Here, the movement may indicate a simple positional change of a finger without conveying a specific meaning.

The first area may be, for example, a numeric keypad area of a keyboard as illustrated in FIG. 5, but is not limited thereto and may alternatively be an arrow key area.

When a mouse is not available or not operating, a user may control a cursor like a mouse by moving a finger in the first area 51.

According to an embodiment, movements of a finger in upward, downward, leftward, and rightward directions (changes in position along the x-axis and y-axis) on the first area 51 may replace a cursor movement function of a mouse. For example, when a finger is moved in a direction from a numeric key "5" toward a numeric key "8" in the first area 51, the processor 15 may recognize the movement as an operation in which a mouse cursor moves upward.

Specifically, after a movement in any one of the upward, downward, leftward, or rightward directions, the cursor may be moved in the corresponding direction by a distance corresponding to a time during which the finger remains stationary. For example, when a finger is moved in the direction from the numeric key "5" toward the numeric key "8" in the first area 51 and then remains stationary for three seconds, the processor 15 may recognize the movement as an operation in which the mouse cursor moves upward by a distance corresponding to three seconds.

According to an embodiment, repeated upward-and-downward movements or repeated downward-and-upward movements of a finger (changes in position along the x-axis and y-axis) on the first area 51 may replace a wheel function of a mouse. For example, when a finger is repeatedly moved in the direction from the numeric key "5" toward the numeric key "8" in the first area 51, the processor 15 may recognize the movement as an operation for scrolling a document displayed on a screen upward.

According to an embodiment, a movement in which a distance between a keyboard and a finger is increased and then returned to an original position (a change in position along the z-axis) on the first area 51 may replace a click function of a mouse. For example, when a finger is positioned on a numeric key "8" and then moved farther away and returned, the processor 15 may recognize the movement as an operation of clicking at a current position of the mouse cursor.

A second-2 input signal may be generated according to a gesture of a user's hand in a second area of the first input module 13.

Here, the gesture is an operation for conveying a specific meaning through a hand, and as described above, different motions may be set for respective key functions.

Here, the second area may be an area 52 including character keys, numeric keys, control keys, and tab/edit keys of a keyboard, as illustrated in FIG. 5. However, the present disclosure is not limited thereto, and some of the character keys, numeric keys, control keys, and tab/edit keys may be excluded, or function keys and direction keys may be further included.

A user may use key functions through hand gestures on the second area 52. As described above, different motions may be set for respective key functions.

Referring to FIG. 6, a control key "ESC" may be mapped to a gesture of moving a hand in an X-shaped pattern. An edit key "Backspace" may be mapped to a gesture of moving a hand from right to left. A shortcut key "Ctrl+C" may be mapped to a gesture of spreading a hand from an inward position to an outward position. A shortcut key "Ctrl+V" may be mapped to a gesture of narrowing a hand from an outward position to an inward position. The mapping table illustrated in FIG. 6 is merely an example, and various gestures may be set not only for the illustrated keys but also for other keys.

Meanwhile, the processor 15 may control an operation mode of the second input module 14 to be ON or OFF. When the operation mode is OFF, the second input module 14 does not recognize gestures or movements, and thus a second input signal is not generated.

When the operation mode is ON, the processor 15 may maintain the operation mode of the second input module 14 in an ON state, but may not perform analysis on a second input signal generated when a z-axis position value of a user's hand is smaller than a preset first z-axis reference value. That is, the second input signal generated in this case may not be analyzed by the processor 15, may not be transmitted to a computer, or even if transmitted, may be recognized as noise by the computer and not analyzed.

According to an embodiment, when the z-axis position value of a user's hand is smaller than the preset first z-axis reference value, the processor 15 may not perform analysis on the second input signal, and when the z-axis position value of the user's hand is greater than the preset first z-axis reference value, the processor 15 may perform analysis on the second input signal.

For example, when the first z-axis reference value is set to 10, even in the case that a second input signal is generated by the second input module 13 as a user performs a gesture set in the mapping table while typing through the first input module 13, in the case that the z-axis position value of the user's hand is smaller than 10, the processor 15 may ignore the second input signal and perform analysis only on a first input signal generated through the first input module 13.

Alternatively, when a second input signal is generated by the second input module 13 as a user performs a gesture set in the mapping table while typing through the first input module 13, and the z-axis position value of the user's hand is greater than 10, the processor 15 may analyze both the first input signal generated through typing and the second input signal generated through the gesture.

Referring again to FIG. 2, the processor 15 of the contact-type input device 10 may transmit an analyzed result to a computer (step S220).

The processor 15 may directly transmit information of a recognized key to the computer based on coordinate values extracted through analysis of the first input signal.

The processor 15 may identify a finger movement through analysis of the second-1 input signal and transmit information on a mouse operation corresponding to the movement to the computer.

The processor 15 may identify a gesture through analysis of the second-2 input signal and transmit information on a key function mapped to the gesture to the computer.

Hereinafter, an operation when the contact-type input device 10 is in a form of a mouse will be described in detail. This case is applicable to a situation in which both a mouse and a keyboard are connected to a computer. In addition, although it has been described above that the contact-type input device 10 is in a form of a mouse, this may also be understood as the first input module 13 being in a form of a mouse.

When the first input module 13 is in a form of a mouse, the second input module 14 may be configured as a printed circuit board (PCB) for generating a magnetic field and disposed under buttons and a wheel included in the first input module 13.

The processor 15 may change the operation mode of the second input module 14 to an ON state or an OFF state according to a distance between a user's hand and the first input module 13.

Specifically, the processor 15 may change the operation mode of the second input module 14 to the OFF state when the z-axis position value of the user's hand becomes smaller than a preset second z-axis reference value, and may change the operation mode of the second input module 14 to the ON state when the z-axis position value of the user's hand becomes greater than the preset second z-axis reference value.

For example, when the second z-axis reference value is set to 5, if the z-axis position value of the user's hand is smaller than 5, the operation mode of the second input module 14 is maintained in the OFF state, and the processor 15 may perform analysis only on the first input signal. When the z-axis position value of the user's hand is greater than 5, the operation mode of the second input module 14 is maintained in the ON state, and the processor 15 may perform analysis only on the second input signal.

Although it has been described above that the first input signal generated by the first input module 13 and the second input signal generated by the second input module 14 are analyzed by the contact-type input device 10 and the analyzed results are transmitted to the computer, the present disclosure is not limited thereto. According to an embodiment, the first input signal and the second input signal may be transmitted from the contact-type input device 10 to the computer and analyzed by the computer. In this case, analysis methods of the first input signal and the second input signal are identical to the methods described above, and a mapping table may be stored in the computer when the input signals are analyzed by the computer.

In addition, although it has been described above that the second input module 14 is divided into the first area and the second area to generate a second-1 input signal replacing a mouse function and a second-2 input signal replacing a keyboard key function, respectively, the present disclosure is not limited thereto. According to an embodiment, the entire second input module 14 may be configured to replace only mouse functions or only keyboard functions.

A function mode of the second input module 14 may be set to one of a mouse mode, a keyboard mode, and a dual mode (capable of both mouse and keyboard functions), and such setting may be performed through a separate button on the contact-type input device 10 or through a computer.

Although FIG. 2 describes that steps are executed sequentially, this is merely illustrative of the technical concept of the present embodiment. Those skilled in the art will appreciate that various modifications and variations may be made by changing an execution order described in FIG. 2 or executing steps in parallel without departing from the essential characteristics of the present embodiment, and thus FIG. 2 is not limited to a chronological order.

Meanwhile, according to an embodiment of the present disclosure, the steps described in FIG. 2 may be further divided into additional steps or combined into fewer steps. In addition, some steps may be omitted as necessary, and an order between steps may be changed.

Meanwhile, the disclosed embodiments may be implemented in a form of a recording medium storing instructions executable by a computer. The instructions may be stored in a form of program code, and when executed by a processor, may generate program modules and perform operations of the disclosed embodiments. The recording medium may be implemented as a computer-readable recording medium.

The computer-readable recording medium includes all types of recording media in which instructions interpretable by a computer are stored. For example, the recording medium may include read-only memory (ROM), random access memory (RAM), magnetic tape, magnetic disks, flash memory, and optical data storage devices.

As described above, the disclosed embodiments have been described with reference to the accompanying drawings. Those skilled in the art will understand that the present disclosure may be implemented in other forms without changing the technical spirit or essential characteristics of the present disclosure. Therefore, the disclosed embodiments are illustrative and should not be construed as restrictive.

## Claims

1. A contact-type input device including a non-contact input module, comprising:
a contact-type first input module;
a non-contact-type second input module; and
a processor configured to analyze a first input signal generated by the first input module and a second input signal generated by the second input module in different manners, and to transmit at least one of results of the analysis to a computer.

2. The device of claim 1,
wherein, when the first input module is in a form of a keyboard, the second input module is configured as a printed circuit board (PCB) and is disposed under a key switch included in the first input module.

3. The device of claim 1,
wherein the second input signal is an operation signal according to a change in an electric field or infrared light, and
wherein the processor is configured to analyze the second input signal based on positional changes along x-axis, y-axis, and z-axis of the electric field.

4. The device of claim 3,
wherein the second input signal includes at least one of:
a second-1 input signal replacing a function of a mouse; and
a second-2 input signal replacing a key function of a keyboard.

5. The device of claim 4,
wherein the second-1 input signal is generated according to movement of a user's finger in a first area of the first input module,
wherein the second-2 input signal is generated according to a gesture of a user's hand in a second area of the first input module, and
wherein the gesture is set to have different motions for respective key functions.

6. The device of claim 3,
wherein the processor is configured to:
maintain an operation mode of the second input module in an ON state, and
not perform analysis of the second input signal generated when a z-axis position value of a user's hand is smaller than a preset z-axis reference value.

7. The device of claim 1,
wherein, when the first input module is in a form of a mouse, the second input module is configured as a printed circuit board (PCB) and is disposed under a button and a wheel included in the first input module.

8. The device of claim 7,
wherein the processor is configured to change an operation mode of the second input module to an ON state or an OFF state according to a distance between a user's hand and the first input module.

9. A contact-type input method including a non-contact input module, comprising:
analyzing at least one of a first input signal generated by a contact-type first input module or a second input signal generated by a non-contact-type second input module in different manners; and
transmitting a result of the analysis to a computer.

10. A computer-readable non-transitory recording medium storing a computer program that, when combined with a hardware computer, executes the method of claim 9.
